# EUROPÄISCHE PATENTSCHRIFT

(11) **EP 3 596 002 B1**
(45) Veröffentlichungstag und Bekanntmachung des Hinweises auf die Patenterteilung: **17.02.2021**
(21) Anmeldenummer: 17716597.4
(22) Anmeldetag: 14.03.2017
(51) Int. Cl.: B67D 9/00

(54) **VORRICHTUNG ZUM VERLADEN EINES FLUIDES AUF EIN SCHIFF**
DEVICE FOR LOADING A FLUID ON A SHIP
DISPOSITIF DE CHARGEMENT D'UN FLUIDE SUR UN NAVIRE

(43) Veröffentlichungstag der Anmeldung: 22.01.2020
(73) Patentinhaber: Nexans, 92400 Courbevoie (FR)
(72) Erfinder: SCHULZ, Holger, 30179 Hannover (DE); REITER, Christian, 31157 Sarstedt (DE); EGERER, Ralf, 38723 Seesen (DE)
(74) Vertreter: Ipsilon
(86) Internationale Anmeldenummer: PCT/IB2017/000392
(87) Internationale Veröffentlichungsnummer: WO 2018/167527

(56) Entgegenhaltungen:
- WO-A1-2017/010095
- US-A- 2 922 446

## Beschreibung

Die Erfindung bezieht sich auf eine Vorrichtung zum Verladen eines Fluides von einer Anlegestelle auf ein Schiff gemäß dem Oberbegriff des Patentanspruchs 1.

Eine solche Vorrichtung geht beispielweise aus der WO 2017/010095 A1 hervor.

Das Verladen von Fluiden, beispielsweise von kryogenen oder brennbaren Medien wie flüssiges Erdgas oder flüssiger Wasserstoff, auf ein Schiff erfolgt über einen Verladearm oder einen Kran, welcher sich auf dem Anlegekai befindet. Das Verladen bedeutet hier sowohl das Betanken als auch das Befüllen von Schiffen (auch als Bunkern bezeichnet). Der Verladearm umfaßt bzw. trägt mindestens eine Leitung, welche mit Leitungen auf dem Schiff verbunden werden kann. Der Verladearm kann beispielsweise mehrere starre Leitungen tragen, welche mittels Drehgelenken miteinander verbunden sind. Die starren Leitungen können dabei auch selbst Teil der tragenden Struktur des Verladearms sein. Die Leitung kann auch flexibel sein und von dem Verladearm beispielsweise mittels einer Seilwinde geführt werden.

Bei einer Verladevorrichtung mit einer flexiblen Leitung oder einem Schlauch darf der Mindestbiegeradius der Leitung nicht unterschritten werden, damit diese nicht beschädigt wird, beispielsweise durch Knicken. Insbesondere bei doppelwandigen Leitungen zum Transport kryogener Flüssigkeiten ist der Mindestbiegeradius verglichen zu einwandigen Leitungen gleicher Nennweite relativ groß.

Die US 2014/0318666 A1 beschreibt einen Verladearm, welcher mittels eines Trägers auf dem Kai festgelegt ist. Der Verladearm besteht aus mehreren Teilarmen, welche durch Drehgelenke miteinander verbunden sind. Die Teilarme verfügen über mehrere Führungselemente, über welche eine flexible Leitung geführt wird. Die Führungselemente stellen die freie Bewegung der Leitung sicher, ohne daß diese dabei einen geforderten Mindestbiegeradius unterschreitet. Die Leitung kann durch den Verladearm im Wesentlichen in einer vertikalen Ebene bewegt werden, um mit einer Leitung auf dem Schiff verbunden zu werden. Diese bekannte Vorrichtung hat allerdings den Nachteil, dass der Verladearm keine wesentlichen lateralen Bewegungen ausführen kann. Schiffsbewegungen können nur bis zu einem geringen Grad von der Vorrichtung aufgefangen werden. Bei lateraler Schwenkung des Verladearms wird in die flexible Leitung ein Torsionsmoment eingebracht, was zu einer Beschädigung und, bei repetitiven dynamischen Anwendungen, zu einer Verringerung der Lebensdauer der flexiblen Leitung führen kann. Die seitliche Reichweite der Vorrichtung zum Beladen oder Betanken von Schiffen ist deshalb wesentlich eingeschränkt.

Aus der WO 2017/010095 A1 geht eine Vorrichtung zum Verladen eines Fluides von einer Anlegestelle auf ein Schiff hervor, welche einen Verladearm aufweist, der aus einem Grundpfeiler, einem über ein Drehgelenk schwenkbar mit demselben verbundenen Innenarm und einem mit dem Innenarm über ein Drehgelenk schwenkbar verbundenen Außenarm besteht. Der Grundpfeiler ist auf dem Grund oder Boden der Anlagestelle so verankert, dass seine longitudinale Achse im Wesentlichen vertikal verläuft. Der Innenarm und der Außenarm sind in einer vertikalen Ebene schwenkbar, welche außerdem ein Führungselement aufweist, welches am Innenarm festgelegt ist, und welche auch eine erste flexible Leitung aufweist, die mittels des Führungselements getragen und im Wesentlichen in der vertikalen Ebene geführt wird.

Der Erfindung liegt die Aufgabe zugrunde, dem Verladearm der Vorrichtung laterale Bewegungen zu ermöglichen, ohne dass die flexible Leitung auf Dauer beschädigt wird.

Diese Aufgabe wird entsprechend den kennzeichnenden Merkmalen des Patentanspruchs 1 gelöst.

Dank der erfindungsgemäßen Vorrichtung ist es möglich, die erste flexible Leitung stets in die Richtung des von den Stützen gebildeten Verladearms zu orientieren. Soll der Verladearm in lateraler Richtung geschwenkt werden, um beispielsweise Schiffsbewegungen zu folgen, so wird die erste Stütze um ihre longitudinale Achse gedreht, wobei die zweite flexible Leitung im Wesentlichen in der horizontalen Ebene bewegt wird. Die erste flexible Leitung wird mit dem Verladearm mitbewegt, ohne verdreht oder geknickt zu werden. Auf keine der flexiblen Leitungen wirken dabei Torsionsmomente ein. Es besteht somit insbesondere bei dynamischen Anwendungen keine Gefahr, die flexiblen Leitungen zu beschädigen oder deren Lebensdauer zu beeinträchtigen. Die Vorrichtung nach der Erfindung gewährleistet somit eine relative große seitliche Reichweite sowie ein sicheres Beladen bzw. Betanken von Schiffen mit kryogenen oder brennbaren Fluiden.

Nach einer besonders bevorzugten Ausführungsform der Vorrichtung sind die flexiblen Leitungen und der starre Rohrabschnitt doppelwandig und vakuumisoliert ausgeführt. Beispielsweise befinden sich zwischen den beiden Wandungen Abstandshalter sowie eine reflektierende Folie. Insbesondere Kryoleitungen können vorteilhaft für das energiesparende und sichere Verladen von sehr kalten Medien eingesetzt werden, da keine äußere Wärme zu den Medien vordringt und Eisbildung an der Oberfläche der Rohre verhindert wird.

Ausführungsbeispiele des Erfindungsgegenstandes sind in den Zeichnungen dargestellt. Es zeigen:
Fig. 1 eine schematische Darstellung einer Ausführungsform der Vorrichtung nach der Erfindung,
Fig. 2 einen horizontalen Schnitt der Vorrichtung nach Fig. 1.

In den Zeichnungen beziehen sich gleiche Bezugszeichen auf gleiche technische Merkmale.

Die erfindungsgemäße Vorrichtung 1 befindet sich entweder an einem Anlegekai an Land oder auf einem Bunkerschiff, welches andere Schiffe mit Ladung oder Treibstoff versorgt. Im Folgenden wird stellvertretend für diese Möglichkeiten der Begriff Anlegestelle verwendet.

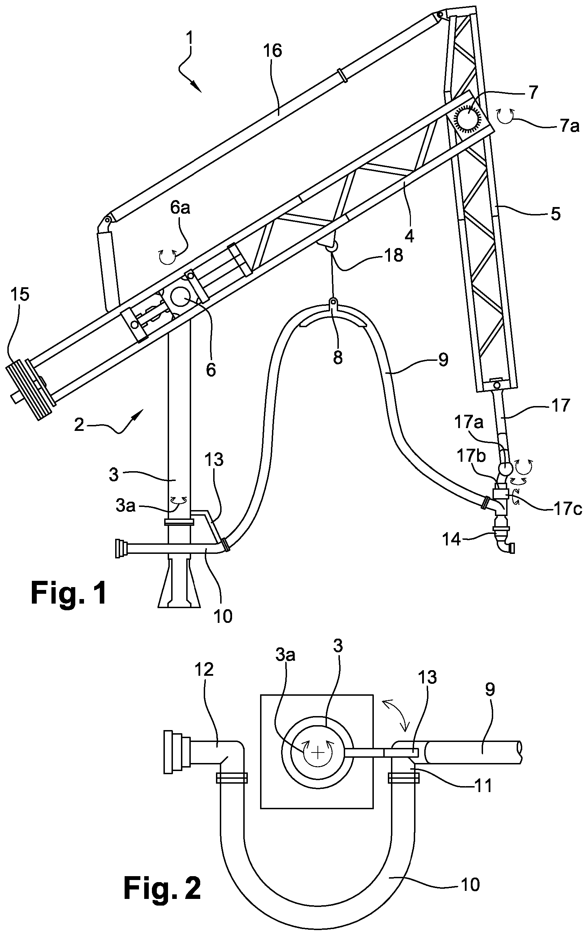

Die erfindungsgemäße Vorrichtung 1 besteht, in dem Ausführungsbeispiel nach Fig. 1, aus einem artikulierten Verladearm 2, welcher auf dem Boden der Anlegestelle oder auf einer Trägerplatte festgelegt ist (nicht dargestellt). Der Verladearm 2 besteht aus drei länglichen, balken- oder strebenartigen Stützen 3, 4, 5, welche durch Drehgelenke 6, 7 drehbar miteinander verbunden sind. Die erste Stütze ist ein Grundpfeiler 3, welcher auf dem Grund oder Boden der Anlegestelle fest verankert ist. Zumindest der obere Abschnitt des Grundpfeilers 3 ist um seine longitudinale Achse drehbar, wie durch den Pfeil 3a angedeutet. Die zweite und die dritte Stütze 4, 5 sind dank der Drehgelenke 6, 7 beweglich in der gemeinsamen vertikalen Ebene ihrer longitudinalen Achsen, wie durch die Pfeile 6a, 7a angedeutet. Die zweite Stütze 4 und die dritte Stütze 5 werden auch als Innenarm und Außenarm bezeichnet. An dem pfeilerseitigen Ende des Innenarms Stütze 4 ist ein Gegengewicht 15 angebracht, welches die unterschiedlichen Hebel auf beiden Seiten des Drehgelenks 6 des Innenarms 4 und des damit verbundenen Außenarms 5 ausgleicht. Eine artikulierte Haltestange 16, auch Pantograph genannt, verbindet die dritte Stütze bzw. den Außenarm 5 mit dem gegengewichtsseitigen Teil des Innenarms 4.

Der Verladearm 2 bildet eine Tragestruktur für eine erste flexible Leitung 9, durch welche eine Flüssigkeit oder ein Gas zum Beladen oder Betanken eines Schiffes fließt. Die erste flexible Leitung 9 ist an ihrem schiffseitigen Ende (rechts in Fig. 1) über eine Kupplung (nicht dargestellt) mit Leitungen oder Tanks (nicht dargestellt) auf dem zu beladenden/betankenden Schiff verbunden. Eine Sicherheitstrennkupplung 14 ist zusätzlich zwischen dem Ende der ersten flexiblen Leitung 9 und der Kupplung angeordnet. Die Sicherheitstrennkupplung 14 ist mittels einer Verbindungsstange 17 an dem schiffseitigen Ende der dritten Stütze 5 festgelegt. Die Verbindungsstange 17 verfügt über drei miteinander artikulierte Drehgelenke 17a, 17b, 17c, welche um drei orthogonale Achsen drehbar sind (siehe Pfeile in Fig. 1). Dadurch kann die Kupplung in die richtige Ausrichtung bezüglich des zu beladenden/betankenden Schiffs gebracht werden. Die Sicherheitstrennkupplung 14 stellt sicher, daß die flexible Leitung 9 nicht beschädigt wird oder abreißt, wenn sich das Schiff beispielsweise zu weit aus dem Arbeitsbereich bewegt. Die Leitung 9 wird dann derart getrennt, daß das Leitungsende verschlossen bleibt und deshalb keine Flüssigkeit oder kein Gas entweichen kann.

An dem Verladearm 2 ist weiterhin ein Führungselement 8 angebracht, an welchem die erste flexible Leitung 9 anliegt. Die Leitung 9 ist fest an dem Führungselement 8 angebracht. Nach einer Variante kann das Führungselement 8 auch eine solche Oberflächenbeschaffenheit haben, daß die Reibung zwischen dem Führungselement 8 und der flexiblen Leitung 9 gering ist, sodaß sich die Leitung 9 gegenüber dem Führungselement 8 verschieben kann. Der Radius des Führungselements 8 ist gleich dem oder größer als der Mindestbiegeradius der flexiblen Leitung 9. Das Führungselement ist beispielsweise mittels einer Seilwinde 18 an der zweiten Stütze 4 befestigt. Wenn die dritte Stütze 5 schiffseitig ausschwenkt, wird das Führungselement 8 mittels der Seilwinde 18 nach unten gelassen, so daß die flexible Leitung 9 begradigt und deren schiffseitiges Ende zu dem Schiff geführt wird.

Erfindungsgemäß ist um den Grundpfeiler 3 eine zweite, zusätzliche flexible Leitung 10 angeordnet. Ein horizontaler Schnitt durch den Grundpfeiler 3 mit der zweiten flexiblen Leitung 10 ist in Fig. 2 gezeigt. Die zweite flexible Leitung 10 ist in etwa in einem U-Bogen im Wesentlichen in der horizontalen Ebene angeordnet, d.h. im Wesentlichen parallel zum Boden des Standorts der Vorrichtung 1. Die Ebenen, in denen sich die beiden flexiblen Leitungen 9, 10 befinden, sind demnach im Wesentlichen senkrecht zueinander angeordnet. Die zweite flexible Leitung 10 ist mittels eines ersten starren Rohrbogens 11 mit der ersten flexiblen Leitung 9 verbunden. An ihrem anderen Ende ist die zweite flexible Leitung 10 ebenfalls mittels eines zweiten starren Rohrbogens 12 an eine Versorgungsleitung, einen Tank o.ä. (nicht dargestellt) angeschlossen. Der erste starre Rohrbogen 11 ist mit dem Grundpfeiler 3 des Verladearms 2 durch ein Verbindungsglied 13 mechanisch fest verbunden. Die zweite flexible Leitung 10 kann beispielsweise auf einem Stützelement (nicht dargestellt) aufliegen, auf welchem sie sich frei bewegen kann.

Um die erste flexible Leitung 9 in eine bestimmte laterale Position zu bringen, wird die Vorrichtung 1 um die longitudinale Achse des Grundpfeilers 3 gedreht (Pfeil 3a). Der Drehwinkel des Grundpfeilers kann beispielsweise bis zu 45° betragen. Durch die Drehung bewegt sich der erste starre Rohrbogen 11 um die longitudinale Achse des Grundpfeilers 3 mit. Die erste flexible Leitung 9 erhält somit eine Orientierung, die der zweiten und dritten Stütze 4, 5 entspricht. Die erste flexible Leitung 9 erfährt dabei kein Torsionsmoment. Der zweite starre Rohrbogen 12 verbleibt in seiner Position. Die zweite flexible Leitung 10 folgt der Drehung des Pfeilers 3. Es wirkt ebenfalls kein Torsionsmoment auf die zweite flexible Leitung 10, da diese nicht in radialer Richtung verdreht wird. Lediglich ihre Position in der horizontalen Ebene wird verändert.

Die flexiblen Leitungen 9, 10 und die Rohrstücke 11, 12 können jeweils doppelwandig und vakuumisoliert ausgeführt sein. Die Verbindungen zwischen den starren und flexiblen Leitungen bzw. Rohren können dann beispielweise über bekannte Johnston-Kupplungen ausgeführt werden. Die Verbindungsstellen können auch verschweißt werden, sodaß sich ein durchgehender Vakuumraum zwischen den inneren und den äußeren Wandungen der Leitungen ergibt. Die flexiblen Leitungen 9, 10 sind beispielsweise gewellte Metallrohre. Sie bestehen beispielsweise jeweils aus mindestens zwei ineinander liegenden flexiblen Metallrohren. Der Zwischenraum zwischen den einzelnen Metallrohren kann zur Wärmedämmung mit Schaum ausgefüllt sein. Zur Vakuumisolierung kann der Zwischenraum evakuiert und mit reflektierender Folie und Abstandhaltern zwischen den beiden Rohren versehen sein. An den flexiblen Leitungen können jeweils weitere Kabel oder Leitungen angebracht sein, beispielsweise zur Daten- und/oder Stromübertragung.

Anstatt jeweils der einen dargestellten ersten und zweiten flexiblen Leitungen 9, 10 können jeweils auch zwei oder mehr flexible Leitungen eingesetzt werden, die dann jeweils mit einer entsprechenden Anzahl starrer Rohrstücke und Kupplungen verbunden werden.

Die Vorrichtung 1 nach der Erfindung kann direkt am Boden der Anlegestelle befestigt sein. Die Vorrichtung 1 kann fest verankert stehen oder beispielweise auf Schienen lateral verschiebbar sein.

## Patentansprüche

1. Vorrichtung (1) zum Verladen eines Fluides von einer Anlegestelle auf ein Schiff, welche einen Verladearm (2) aufweist, der aus einem Grundpfeiler (3), einem über ein Drehgelenk (6) schwenkbar mit demselben verbundenen Innenarm (4) und einem mit dem Innenarm (4) über ein Drehgelenk (7) schwenkbar verbundenen Außenarm (5) besteht, wobei der Grundpfeiler (3) auf dem Grund oder Boden der Anlegestelle so verankert ist, dass seine longitudinale Achse im Wesentlichen vertikal verläuft, und wobei der Innenarm (4) und der Außenarm (5) in einer vertikalen Ebene schwenkbar sind, welche außerdem ein Führungselement (8) aufweist, welches am Innenarm (4) festgelegt ist, und welche auch eine erste flexible Leitung (9) aufweist, welche mittels des Führungselements (8) getragen und im Wesentlichen in der vertikalen Ebene geführt wird, **dadurch gekennzeichnet,**
- **dass** der Grundpfeiler (3) um seine vertikale longitudinale Achse drehbar ist und
- **dass** die Vorrichtung (1) weiterhin eine zweite flexible Leitung (10) umfaßt, welche im Wesentlichen in einer horizontalen Ebene um dem Grundpfeiler (3) herum angeordnet und mittels eines starren Rohrbogens (11) mit der ersten flexiblen Leitung (9) verbunden ist, welcher über ein Verbindungsglied (13) fest mit dem Grundpfeiler (3) verbunden ist, und welche mittels eines zweiten starren Rohrbogens (12) an eine Versorgungsleitung angeschlossen ist.

2. Vorrichtung (1) nach Anspruch 1, **dadurch gekennzeichnet, dass** sie auf Schienen in einer vorbestimmten Richtung verschiebbar ist.

3. Vorrichtung (1) nach Anspruch 1 oder 2, **dadurch gekennzeichnet, dass** die flexiblen Leitungen (9,10) und der starre Rohrbogen (11) doppelwandig und vakuumisoliert sind.

4. Vorrichtung (1) nach einem der Ansprüche 1 bis 3, **dadurch gekennzeichnet, dass** die flexiblen Leitungen (9, 10) jeweils mit dem starren Rohrbogen (11) verschweißt sind.

5. Vorrichtung nach Anspruch 3, **dadurch gekennzeichnet, dass** die flexiblen Leitungen (9, 10) jeweils mittels Johnston-Kupplungen mit dem starren Rohrbogen (11) verbunden sind.

6. Vorrichtung (1) nach einem der vorangehenden Ansprüche, **dadurch gekennzeichnet, dass** an den flexiblen Leitungen (9, 10) mindestens ein Kabel zur Übertragung von Strom und/oder Daten angebracht ist.

## Claims

1. A device (1) for loading a fluid from a landing stage onto a ship, which has a loading arm (2), which consists of a foundation pillar (3), an inner arm (4) pivotably connected to the same via a pivot joint (6) and an outer arm (5) pivotably connected to the inner arm (4) via a pivot joint (7), wherein the foundation pillar (3) is anchored on the base or the bottom of the landing stage in such a manner that its longitudinal axis extends substantially vertically, and wherein the inner arm (4) and the outer arm (5) can be pivoted in a vertical plane, which furthermore has a guide element (8), which is fixed to the inner arm (4), and which also has a first flexible line (9), which is supported by means of the guide element (8) and is guided substantially in the vertical plane, **characterized in**
- **that** the foundation pillar (3) is rotatable about its vertical longitudinal axis and
- **that** the device (1) furthermore comprises a second flexible line (10), which is arranged substantially in a horizontal plane around the foundation pillar (3) and is connected by means of a rigid tube bend (11) to the first flexible line (9), which is connected fixedly to the foundation pillar (3) via a connecting member (13), and which is connected to a supply line by means of a second rigid tube bend (12).

2. The device (1) according to claim 1, **characterized in that** it is displaceable on rails in a predetermined direction.

3. The device (1) according to claim 1 or 2, **characterized in that** the flexible lines (9, 10) and the rigid tube bend (11) are double-walled and vacuum-insulated.

4. The device (1) according to any ne of claims 1 to 3, **characterized in that** the flexible lines (9, 10) in each case are welded to the rigid tube bend (11).

5. The device (1) according to claim 3, **characterized in that** the flexible lines (9, 10) in each case are connected by means of Johnston couplings to the rigid tube bend (11).

6. The device (1) according to any one of the preceding claims, **characterized in that** at least one cable for the transmission of electricity and/or data is attached to the flexible lines (9, 10).

## Revendications

1. Dispositif (1) pour le chargement d'un fluide d'un embarcadère vers un navire, qui comprend un bras de chargement (2), qui est constitué d'un pilier de base (3), d'un bras interne (4) relié avec celui-ci de manière pivotante par l'intermédiaire d'une articulation rotative (6) et d'un bras externe (5) relié de manière pivotante avec le bras interne (4) par l'intermédiaire d'une articulation rotative (7), dans lequel le pilier de base (3) est ancré sur la base ou le sol de l'embarcadère de façon à ce que son axe longitudinal s'étende globalement verticalement et dans lequel le bras interne (4) et le bras externe (5) sont pivotants dans un plan vertical, qui comprend en outre un élément de guidage (8) qui est fixé au bras interne (4), et qui comprend également une première conduite flexible (9) qui est supportée au moyen de l'élément de guidage (8) et qui est guidé globalement dans le plan vertical, **caractérisé en ce que**
- le pilier de base (3) est rotatif autour de son axe longitudinal vertical et
- le dispositif (1) comprend en outre une deuxième conduite flexible (10) qui est disposée globalement dans un plan horizontal autour du pilier de base (3) et est reliée, au moyen d'un tube coudé rigide (11) avec la première conduite flexible (9), qui est reliée de manière fixe avec le pilier de base (3) par l'intermédiaire d'un organe de liaison (13) et qui est raccordée au moyen d'un deuxième tube coudé rigide (12) à une conduite d'alimentation.

2. Dispositif (1) selon la revendication 1, **caractérisé en ce qu'**il peut coulisser sur des rails dans une direction prédéterminée.

3. Dispositif (1) selon la revendication 1 ou 2, **caractérisé en ce que** les conduites flexibles (9, 10) et le tube coudé rigide (11) comprennent des doubles paroi et sont isolés du vide.

4. Dispositif (1) selon l'une des revendications 1 à 3, **caractérisé en ce que** les conduites flexibles (9, 10) sont soudées chacune avec le tube coudé rigide (11).

5. Dispositif (1) selon la revendication 3, **caractérisé en ce que** les conduites flexibles (9, 10) sont reliées chacune au moyen de couplages Johnston avec le tube coudé rigide (11).

6. Dispositif (1) selon l'une des revendications précédentes, **caractérisé en ce que**, aux conduites flexibles (9, 10), est branché au moins un câble pour la transmission de courant et/ou de données.
